# EUROPEAN PATENT APPLICATION

(11) **EP 1 827 008 A1**
(43) Date of publication of application: **29.08.2007**
(21) Application number: 06256538.7
(22) Date of filing: 22.12.2006
(51) Int. Cl.: H04N 5/00, H04N 7/24

(54) **Content receiving, recording and reproducing device and content distribution system**

(30) Priority: 28.12.2005 JP 2005376900
(71) Applicant: ORION ELECTRIC CO., Ltd., Fukui 915-8555 (JP)
(72) Inventor: Morishita, Ryouichi, c/o IPD, Echizen-city Fukui 915-8555 (JP)
(74) Representative: Paget, Hugh Charles Edward

(57) **Abstract**

The invention provides a recording and reproducing device having a CM skip function, which prevents reductions of advertising effects and user-friendliness. In the case where the contents recorded on the recording and reproducing device include a commercial portion, a viewing history flag is assigned to the commercial portion. If the commercial has been reproduced (step 403), the viewing history flag relevant to the commercial is set at 1 (step 405) to control viewing history of each individual commercial portion. In the case where there is a request for reproduction of the contents (step 401), it is determined whether or not the commercial yet to be viewed is more than a predetermined amount (step 801) to secure convenience for the user by imposing no operational limit until reaching the predetermined amount. If the predetermined amount is reached, an operational limit is imposed so as to urge viewing of the commercial (step 802).

## Description

### BACKGROUND OF THE INVENTION

### Field of the Invention

The present invention relates to a content distribution system or a content receiving, recording and reproducing device, and in particular, to the content distribution system from which distributed contents having commercial information added thereto or associated therewith are distributed or the content receiving, recording and reproducing device for receiving and recording them.

### Description of the Related Art

Conventionally, a content provider side, namely a program production and/or broadcasting company obtains advertising income from a sponsoring company by inserting a commercial (may be described as "CM" as a synonym hereafter) thereof into the contents to be distributed (broadcasted). However, recording and reproducing devices (devices using a random-accessible recording medium such as an HDD recorder) have become popular and sophisticated to the extent that the distributed contents (programs) can be easily recorded on a recording medium to reproduce them by skipping a CM portion on a user side. Such a CM skip function is a convenient function for the user. However, it is concerned that, if such a situation is accelerated, broadcasting the CM becomes less advantageous for the sponsoring company side and the number of the sponsoring companies decreases so that the content provider side can no longer obtain sufficient advertising income. Consequently, the user side may also suffer a disadvantage that distribution of attractive contents decreases, because funds may become insufficient on the content provider side.

As for such a problem, techniques relating to a device for urging the user to view the commercial portion are disclosed by Japanese Patent Laid-Open Publication Nos. 2001-111921, 2002-251157, 2002-325226, and 2005-176220 (patent documents 1 to 4) and the like.

The conventional techniques disclosed by the patent documents are the ones for having the CM viewed by a rather particular presentation method, for example displaying the CM on a sub-screen or printing it on a paper medium (patent documents 1 and 4), and the ones for allowing no CM to be skipped (patent documents 2 and 3). In the case of the former method, advertising effects of the CM are somewhat reduced so that the disadvantage on an advertiser side increases a little. In the case of the latter method, the CM skip function is no longer usable so that the disadvantage on the user side increases.

### SUMMARY OF THE INVENTION

In view of the above-mentioned points, the present invention mainly provides a recording and reproducing device having the CM skip function, which prevents convenience for the user from being impaired while preventing the advertising effects of the CM from being reduced.

A content distribution system of a first aspect is the one comprising: a content distribution device for distributing contents associated with a commercial; and a content receiving, recording and reproducing device capable of receiving the distributed contents and recording the received contents on an information recording medium, and characterized in that: when distributing the contents associated with a commercial from the content distribution device, the contents are transmitted after adding commercial information indicating the contents of the commercial; when the content receiving, recording and reproducing device receiving the contents records the contents on the information recording medium, each individual commercial portion associated with the contents is given identification information to be stored correspondingly to a recording place of the commercial portion and the commercial information; in the case where, on reproducing the contents recorded on the information recording medium, it is determined that there is a commercial portion associated with the contents to be reproduced, the identification information corresponding to the commercial portion is stored correspondingly to main part viewing history information indicating that a main part has been viewed; and in the case where it is determined that the commercial portion recorded on the information recording medium has been reproduced, viewing history information indicating that the commercial portion has been viewed is stored correspondingly to the identification information given to the commercial portion so that, when there is a request for reproduction of the contents recorded on the information recording medium or when there is a request for viewing of the contents received by a content receiving portion, the reproduction or viewing of the contents is limited if determined by referring to the identification information, the main part viewing history information and the viewing history information that the commercial portion yet to be viewed exceeds a predetermined amount while the main part has been viewed.

According to the configuration, in the case where the "contents associated with a commercial" are recorded by the content receiving, recording and reproducing device, they are recorded to be able to determine the commercial portion (given identification information, and stored correspondingly to the recording place of each individual commercial portion and the commercial information) and are further stored correspondingly to whether or not the contents associated with the commercial portion have been viewed (main part viewing history information) and whether or not the commercial portion itself has been viewed (viewing history information). Therefore, it is possible to determine "the commercial portion yet to be viewed while the main part has been viewed" so as to limit the reproduction or viewing of the contents if determined that it exceeds the "predetermined amount." To be more specific, in the case where a CM 1-1 and a CM 1-2 are inserted into a program 1 for instance and if a user views the program 1 by skipping the CM on the content receiving, recording and reproducing device having recorded the CM 1-1 and CM 1-2, the CM 1-1 and CM 1-2 are stored correspondingly to information to the effect of "yet to be viewed while the main part has been viewed." The reproduction or viewing of the contents is limited if determined that such commercials exceed the "predetermined amount." The "contents associated with a commercial" includes the cases where the CM and the main part are separately transmitted (the cases where the CM and the main part are associated somehow) in addition to the contents to be distributed in which the CM is inserted into the main part. The "commercial information" is the information on a title, a genre, a product, a performer and the like of the commercial. It is not limited to transmitting such concrete information added as-is to the contents. It is also possible, for instance, to add the identification information to each individual commercial as the only information to be added to the contents and transmitted (the device receiving it determines various kinds of information from the identification information). As for the content receiving, recording and reproducing device, the "identification information" to be given to each individual commercial portion is not limited to the one given separately from the commercial information but may also be the one utilizing the received commercial information (such as the commercial information itself). "To be stored correspondingly to main part viewing history information" means to be stored in the content receiving, recording and reproducing device identifiably as the CM of which main part has been viewed, which is not necessarily limited to newly adding unique information (for instance, the viewed main part is sequentially deleted from the recording medium to render the CM remaining on the recording medium identifiable as "the CM of which main part has been viewed"). Furthermore, the "predetermined amount" means predetermined information on "the number of the commercial portions" determined from the number of places where the commercial portions are recorded, "the number of the commercials" or "length of the commercials (time information)" obtained from the commercial information and the like, of which amount is decided as appropriate and may be "0." "To limit the reproduction or viewing of the contents" is not limited to allowing no contents to be reproduced (viewed) but may also be displaying a warning by superimposing it on a reproduction screen of the contents (or out of a contents display area) (this is intended to prevent the contents from being reproduced (viewed) without any limitation).

A content distribution system of a second aspect is the one comprising: a content distribution device for distributing contents associated with a commercial; and a content receiving, recording and reproducing device capable of receiving the distributed contents and recording the received contents on an information recording medium, and characterized in that: when distributing the contents associated with a commercial from the content distribution device, the contents are transmitted after adding commercial information indicating the contents of the commercial, and a part or all of the contents distributed from the content distribution device are transmitted after adding viewing condition commercial information as a necessary condition for viewing of the contents; when the content receiving, recording and reproducing device receiving the contents associated with a commercial records the contents on the information recording medium, each individual commercial portion associated with the contents is given identification information to be stored correspondingly to a recording place of the commercial portion and the commercial information; in the case where, on reproducing the contents recorded on the information recording medium, it is determined that there is a commercial portion associated with the contents to be reproduced, the identification information corresponding to the commercial portion is stored correspondingly to main part viewing history information indicating that a main part has been viewed; and in the case where it is determined that the commercial portion recorded on the information recording medium has been reproduced, viewing history information indicating that the commercial portion has been viewed is stored correspondingly to the identification information given to the commercial portion so that, when there is a request for reproduction or viewing of the contents with the condition on the content receiving, recording and reproducing device receiving the contents with the condition, the reproduction or viewing of the contents is limited if determined to be affirmative by referring to the commercial information and the viewing history information associated with each individual commercial portion recorded on the information recording medium as to whether or not there is the commercial portion yet to be viewed applicable to the viewing condition commercial information in the commercial portion recorded on the information recording medium.

According to the configuration, in the case where a part or all of the contents distributed from the content distribution device are transmitted after adding a viewing condition (viewing condition commercial information) of the contents and if there is a request for reproduction or viewing of the contents with the condition on the content receiving, recording and reproducing device receiving the contents with the condition, the reproduction or viewing of the contents is limited when the commercial yet to be viewed applicable to the condition (viewing condition commercial information) is recorded on the information recording medium. To be more specific, it is possible, by adding information on the "CM of a company A" as the viewing condition commercial information to contents A, to condition the user to view the CM of the company A in order to view the contents A (there is no CM of the company A among the unviewed CMs).

A content receiving, recording and reproducing device of a third aspect is the one for receiving contents associated with a commercial and commercial information indicating the contents of the commercial, comprising: a content receiving portion; a recording portion for recording the received contents on an information recording medium; a CM information obtaining portion for obtaining the commercial information; a control portion; an operating portion; and a storage portion, and thereby characterized in that: when recording the contents on the information recording medium, the commercial information is obtained by the CM information obtaining portion, and each individual commercial portion associated with the contents is given identification information to be stored in the storage portion correspondingly to a recording place of the commercial portion and the commercial information; in the case where, on reproducing the contents recorded on the information recording medium, it is determined that there is a commercial portion associated with the contents to be reproduced, the identification information corresponding to the commercial portion is stored in the storage portion correspondingly to main part viewing history information indicating that a main part has been viewed; and in the case where it is determined that the commercial portion recorded on the information recording medium has been reproduced, viewing history information indicating that the commercial portion has been viewed is stored in the storage portion correspondingly to the identification information given to the commercial portion so that, when there is a request for reproduction of the contents recorded on the information recording medium or when there is a request for viewing of the contents received by the content receiving portion, the reproduction or viewing of the contents is limited if determined by referring to the identification information, the main part viewing history information and the viewing history information that the commercial portion yet to be viewed exceeds a predetermined amount while the main part has been viewed.

The "storage portion" for recording various kinds of information (identification information, commercial information and the like) and the "information recording medium" for recording the contents in the configuration are not necessarily formed separately but may also be the same (the contents and various kinds of information are recorded on the same information recording medium).

A content receiving, recording and reproducing device of a fourth aspect is the one for receiving contents associated with a commercial and commercial information indicating the contents of the commercial, comprising: a content receiving portion; a recording portion for recording the received contents on an information recording medium; a CM information obtaining portion for obtaining the commercial information; a control portion; an operating portion; and a storage portion, and thereby characterized in that: when recording the contents on the information recording medium, the commercial information is obtained by the CM information obtaining portion, and each individual commercial portion associated with the contents is given identification information to be stored in the storage portion correspondingly to a recording place of the commercial portion and the commercial information; in the case where, on reproducing the contents recorded on the information recording medium, it is determined that there is a commercial portion associated with the contents to be reproduced, the identification information corresponding to the commercial portion is stored in the storage portion correspondingly to main part viewing history information indicating that a main part has been viewed; and in the case where it is determined that the commercial portion recorded on the information recording medium has been reproduced, viewing history information indicating that the commercial portion has been viewed is stored in the storage portion correspondingly to the identification information given to the commercial portion so that, when there is a request for reproduction or viewing of the contents having the viewing condition commercial information as the condition necessary for viewing added thereto, the reproduction or viewing of the contents is limited if determined to be affirmative by referring to the commercial information, the main part viewing history information and the viewing history information associated with each individual commercial portion recorded on the information recording medium as to whether or not there is any commercial yet to be viewed applicable to the viewing condition commercial information while the main part has been viewed in the commercial portion recorded on the information recording medium.

According to the configuration, when there is a request for reproduction or viewing of the contents having the viewing condition (viewing condition commercial information) added thereto, the reproduction or viewing of the contents with the condition is limited in the case of the commercial yet to be viewed applicable to the condition (viewing condition commercial information) recorded on the information recording medium while the main part has been viewed. To be more specific, it is possible, by adding information on a "CM of a company A" as the "viewing condition commercial information" to the contents A, to condition the user to view the CM of the company A in order to view the contents A (there is no CM of the company A among the unviewed CMs while the main part has been viewed).

The content receiving, recording and reproducing device of a fifth aspect is the one according to the third or fourth aspect characterized in that, when there is a request for reproduction or viewing of the contents, the contents are reproduced or viewed after reproducing at least a part of the commercial portion yet to be viewed or at least a part of the commercial portion yet to be viewed is reproduced after reproducing or viewing the contents if determined that there is more than a predetermined amount of the commercials yet to be viewed while the main part has been viewed in the commercial portion recorded on the information recording medium.

According to the configuration, at least a part of the commercial portion yet to be viewed is reproduced before or after reproducing or viewing the contents if determined that there is more than a predetermined amount of the commercials yet to be viewed while the main part has been viewed in the commercial portion recorded on the information recording medium. As for the commercial portion determined to have been reproduced as a result of the reproduction process, the viewing history information indicating that the commercial portion has been viewed is stored in the storage portion correspondingly to the identification information given to the commercial portion.

The content receiving, recording and reproducing device of a sixth aspect is the one according to any one of the third to fifth aspects, characterized in that: when receiving and viewing a grouping of the contents associated with a commercial, total time of the commercials associated with the grouping of the contents is calculated from the commercial information obtained by the CM information obtaining portion; the grouping of the contents is recorded on the information recording medium but is not reproduced until a delayed time comes as the total time elapses from a start of distribution of the grouping of the contents; and if determined by referring to the identification information, the main part viewing history information and the viewing history information that there is a commercial portion yet to be viewed recorded on the information recording medium while the main part has been viewed, it is reproduced between the start of distribution of the grouping of the contents and coming of the delayed time so as to start time shifting reproduction of the main part except the commercial portion of the grouping of the contents when the delayed time comes.

According to the configuration, when receiving the program 1 which is a so-called live broadcast having the CM 1-1 and CM 1-2 inserted therein for instance, the total time of the CM 1-1 and CM 1-2 is calculated based on the commercial information. And the time shifting reproduction of the program 1 except the CM 1-1 and CM 1-2 is started from the point in time delayed by the total time (a previously recorded CM yet to be viewed is reproduced up to the point in time if there is one). Therefore, the "time shifting reproduction of the program 1 except the commercial (of only the main part) is finished almost at the same time as the ending time of the broadcast of the program 1. Whether or not the main part of the program 1 is deleted from the information recording medium after finishing the time shifting reproduction, the CM 1-1 and CM 1-2 are recorded on the information recording medium (stored in the storage portion) correspondingly to the information to the effect of "yet to be viewed while the main part has been viewed." The "grouping of the contents" means a predetermined unit of the contents (such as an equivalent of one program).

The content receiving, recording and reproducing device of a seventh aspect is the one according to the sixth aspect characterized in that preference information on a user is pre-registered with the storage portion to determine the commercial portion recorded on the information recording medium yet to be viewed and matching with the preference information while the main part has been viewed by using the commercial information so as to preferentially reproduce the commercial portion thus obtained.

According to the configuration, a commercial determined to fall under the "preference information on the user" (such as genre information) is preferentially reproduced.

The content receiving, recording and reproducing device of an eighth aspect is the one according to any one of the third to seventh aspects, characterized in that: when there is a request for deletion of the contents recorded on the information recording medium and if determined that there is the commercial portion associated with the contents to be deleted, it is determined by referring to the identification information, the main part viewing history information and the viewing history information whether or not there is a commercial portion yet to be viewed while the main part has been viewed; in the case where there is such a commercial portion, the commercial portion is left on the information recording medium; and in the case where it is determined thereafter that the commercial portion has been reproduced, it is deleted.

According to the configuration, even when the user provides an instruction to delete the contents (together with the CM associated therewith) recorded on the information recording medium, the commercial portion is left on the information recording medium and is deleted thereafter when determined that the commercial portion has been reproduced in the case where the CM associated with the contents falls under the "commercial yet to be viewed while the main part has been viewed."

The content receiving, recording and reproducing device of a ninth aspect is the one according to any one of the third to eighth aspects, characterized in that: the operating portion is provided with an unviewed CM reproducing button so that, when instructed to reproduce an unviewed commercial by an input of the unviewed CM reproducing button, an unviewed commercial portion recorded on the information recording medium is reproduced until there is an instruction to finish reproduction of the unviewed commercial or in a predetermined period of time; or when instructed to reproduce the unviewed commercial by the input of the unviewed CM reproducing button while viewing the distributed contents, the unviewed commercial portion recorded on the information recording medium is reproduced while recording the contents being viewed on the information recording medium until there is the instruction to finish the reproduction of the unviewed commercial or in the predetermined period of time so as to start the time shifting reproduction of the contents being viewed on finishing the reproduction of the unviewed commercial; or when instructed to reproduce the unviewed commercial by the input of the unviewed CM reproducing button while reproducing the contents recorded on the information recording medium, the unviewed commercial portion recorded on the information recording medium is reproduced until there is the instruction to finish the reproduction of the unviewed commercial or in the predetermined period of time so as to continue the reproduction of the contents recorded on the information recording medium on finishing the reproduction of the unviewed commercial.

According to the configuration, the "unviewed commercial" recorded on the information recording medium is reproduced according to the input of the "unviewed CM reproducing button."

The content distribution system of the first aspect is the one comprising: a content distribution device for distributing contents associated with a commercial; and a content receiving, recording and reproducing device capable of receiving the distributed contents and recording the received contents on an information recording medium, and characterized in that: when distributing the contents associated with a commercial from the content distribution device, the contents are transmitted after adding commercial information indicating the contents of the commercial; when the content receiving, recording and reproducing device receiving the contents records the contents on the information recording medium, each individual commercial portion associated with the contents is given identification information to be stored correspondingly to a recording place of the commercial portion and the commercial information; in the case where, on reproducing the contents recorded on the information recording medium, it is determined that there is a commercial portion associated with the contents to be reproduced, the identification information corresponding to the commercial portion is stored correspondingly to main part viewing history information indicating that a main part has been viewed; and in the case where it is determined that the commercial portion recorded on the information recording medium has been reproduced, viewing history information indicating that the commercial portion has been viewed is stored correspondingly to the identification information given to the commercial portion so that, when there is a request for reproduction of the contents recorded on the information recording medium or when there is a request for viewing of the contents received by the content receiving portion, the reproduction or viewing of the contents is limited if determined by referring to the identification information, the main part viewing history information and the viewing history information that the commercial portion yet to be viewed exceeds a predetermined amount while the main part has been viewed. According to the content distribution system, in the case where the CM 1-1 and CM 1-2 are inserted into the program 1 for instance and if the user views the program 1 by skipping the CM on the content receiving, recording and reproducing device having recorded the CM 1-1 and CM 1-2, the CM 1-1 and CM 1-2 are stored correspondingly to the information to the effect of "yet to be viewed while the main part has been viewed." The reproduction or viewing of the contents is limited if determined that such commercials exceed the "predetermined amount." Therefore, it is possible to urge the user to view the CM, and the user can use the CM skip function freely until the unviewed CMs reach the "predetermined amount." For this reason, it is possible to prevent convenience for the user from being impaired while preventing the advertising effects of the CM from being reduced. As the CM inserted into the program of which main part is yet to be viewed remains yet to be viewed in the case of simply leaving only the viewing history of the recorded CMs, some limit of viewing may be imposed (it is unreasonable to be forced to view the CM if the main part has not been viewed). According to the configuration, however, it is possible to determine the CM "yet to be viewed while the main part has been viewed" so as to prevent occurrence of the situation described above which is unreasonable for the user.

The content distribution system of the second aspect is the one comprising: a content distribution device for distributing contents associated with a commercial; and a content receiving, recording and reproducing device capable of receiving the distributed contents and recording the received contents on an information recording medium, and characterized in that: when distributing the contents associated with a commercial from the content distribution device, the contents are transmitted after adding commercial information indicating the contents of the commercial, and a part or all of the contents distributed from the content distribution device are transmitted after adding viewing condition commercial information as a necessary condition for viewing of the contents; when the content receiving, recording and reproducing device receiving the contents associated with a commercial records the contents on the information recording medium, each individual commercial portion associated with the contents is given identification information to be stored correspondingly to a recording place of the commercial portion and the commercial information; in the case where, on reproducing the contents recorded on the information recording medium, it is determined that there is a commercial portion associated with the contents to be reproduced, the identification information corresponding to the commercial portion is stored correspondingly to main part viewing history information indicating that a main part has been viewed; and in the case where it is determined that the commercial portion recorded on the information recording medium has been reproduced, viewing history information indicating that the commercial portion has been viewed is stored correspondingly to the identification information given to the commercial portion so that, when there is a request for reproduction or viewing of the contents with the condition on the content receiving, recording and reproducing device receiving the contents with the condition, the reproduction or viewing of the contents is limited if determined to be affirmative by referring to the commercial information and the viewing history information associated with each individual commercial portion recorded on the information recording medium as to whether or not there is the commercial portion yet to be viewed applicable to the viewing condition commercial information in the commercial portion recorded on the information recording medium. According to the content distribution system, it is possible, by adding information on the "CM of the company A" as the viewing condition commercial information to the contents A for instance, to condition the user to view the CM of the company A in order to view the contents A (there is no CM of the company A among the unviewed CMs). Therefore, it is possible for the sponsor side (content distributor side) to select and set the CM to be viewed by the user more flexibly (for instance, imposing various conditions, such as a CM a1 must have been viewed, or up to five CMs of a1 to a10 may be yet to be viewed, or a CM a7 may be yet to be viewed up to twice).

The content receiving, recording and reproducing device of the fifth aspect is the one according to the third or fourth aspect characterized in that, when there is a request for reproduction or viewing of the contents, the contents are reproduced or viewed after reproducing at least a part of the commercial portion yet to be viewed or at least a part of the commercial portion yet to be viewed is reproduced after reproducing or viewing the contents if determined that there is more than a predetermined amount of the commercials yet to be viewed while the main part has been viewed in the commercial portion recorded on the information recording medium. According to the content receiving, recording and reproducing device, at least a part of the commercial portion yet to be viewed is reproduced before or after reproducing or viewing the contents if determined that there is more than a predetermined amount of the "commercials yet to be viewed while the main part has been viewed" in the commercial portion recorded on the information recording medium. Therefore, viewing of the unviewed CM is further urged.

The content receiving, recording and reproducing device of the sixth aspect is the one according to any one of the third to fifth aspects, characterized in that: when receiving and viewing a grouping of the contents associated with a commercial, total time of the commercials associated with the grouping of the contents is calculated from the commercial information obtained by the CM information obtaining portion; the grouping of the contents is recorded on the information recording medium but is not reproduced until a delayed time comes as the total time elapses from a start of distribution of the grouping of the contents; and if determined by referring to the identification information, the main part viewing history information and the viewing history information that there is a commercial portion yet to be viewed recorded on the information recording medium while the main part has been viewed, it is reproduced between the start of distribution of the grouping of the contents and coming of the delayed time so as to start time shifting reproduction of the main part except the commercial portion of the grouping of the contents when the delayed time comes. According to the content receiving, recording and reproducing device, when receiving the program 1 which is a so-called live broadcast having the CM 1-1 and CM 1-2 inserted therein for instance, the total time of the CM 1-1 and CM 1-2 is calculated based on the commercial information. The time shifting reproduction of the program 1 except the CM 1-1 and CM 1-2 is started from the point in time delayed by the total time, and the "time shifting reproduction of the program 1 except the commercial (of only the main part)" is finished almost at the same time as the ending time of the broadcast of the program 1. For this reason, it is possible to satisfy as much as possible both the desires of the user to "view only the main part continuously by skipping the CM portion" and "view the program as soon as possible." In the case where there is a previously recorded CM yet to be viewed, it is reproduced between the start of the program 1 and elapse of the "total CM time" so as to urge viewing of the unviewed CM.

The content receiving, recording and reproducing device of the eighth aspect is the one according to any one of the third to seventh aspects, characterized in that: when there is a request for deletion of the contents recorded on the information recording medium and if determined that there is the commercial portion associated with the contents to be deleted, it is determined by referring to the identification information, the main part viewing history information and the viewing history information whether or not there is a commercial portion yet to be viewed while the main part has been viewed; in the case where there is such a commercial portion, the commercial portion is left on the information recording medium; and in the case where it is determined thereafter that the commercial portion has been reproduced, it is deleted. According to the content receiving, recording and reproducing device, even when the user provides an instruction to delete the contents (together with the CM associated therewith) recorded on the information recording medium, the commercial portion is left on the information recording medium in the case where the CM associated with the contents falls under the "commercial yet to be viewed while the main part has been viewed." Therefore, it is possible to urge viewing of the unviewed CM more securely.

### BRIEF DESCRIPTION OF THE DRAWINGS

FIG. 1 is a block diagram showing an overview of a configuration of a content distribution system;
FIG. 2 is a block diagram showing an overview of the configuration of a content receiving, recording and reproducing device;
FIG. 3 is a flowchart showing an overview of a process relating to the present invention in the case of recording the contents on an information recording medium;
FIG. 4 is a flowchart showing an overview of the process relating to the present invention in the case of reproducing the contents recorded on the information recording medium;
FIG. 5 is a flowchart showing an overview of the process of "live time shifting reproduction";
FIG. 6 is a diagram showing an overview of an example of a CM information table;
FIG. 7 is an explanatory diagram for describing a concept of the "live time shifting reproduction";
FIG. 8 is a flowchart showing an overview of another process relating to the present invention in the case of reproducing the contents recorded on the information recording medium;
FIG. 9 is a diagram showing an example of a display screen (warning screen);
FIG. 10 is a block diagram showing an overview of the configuration of the content distribution system according to a second embodiment;
FIG. 11 is a flowchart showing an overview of the process relating to the present invention in the case of recording or deleting the contents on the information recording medium according to the second embodiment;
FIG. 12 is a flowchart showing an overview of the process relating to the present invention in the case of reproducing the contents recorded on the information recording medium according to the second embodiment;
FIG. 13 is a flowchart showing an overview of the process relating to the present invention in the case of viewing broadcast contents according to the second embodiment;
FIG. 14 is a diagram showing an overview of an example of the CM information table according to the second embodiment;
FIG. 15 is a flowchart showing an overview of another process relating to the present invention in the case of viewing the broadcast contents;
FIG. 16 is a diagram showing an example of the configuration of broadcasted contents; and
FIG. 17 is a block diagram showing an overview of the configuration of another content distribution system.

### DETAILED DESCRIPTION OF THE PREFERRED EMBODIMENTS

Hereunder, concrete embodiments of the present invention will be described with reference to the drawings. The following embodiments are forms for concretizing the present invention, which are not intended to limit the present invention within the scope thereof.

### [First Embodiment]

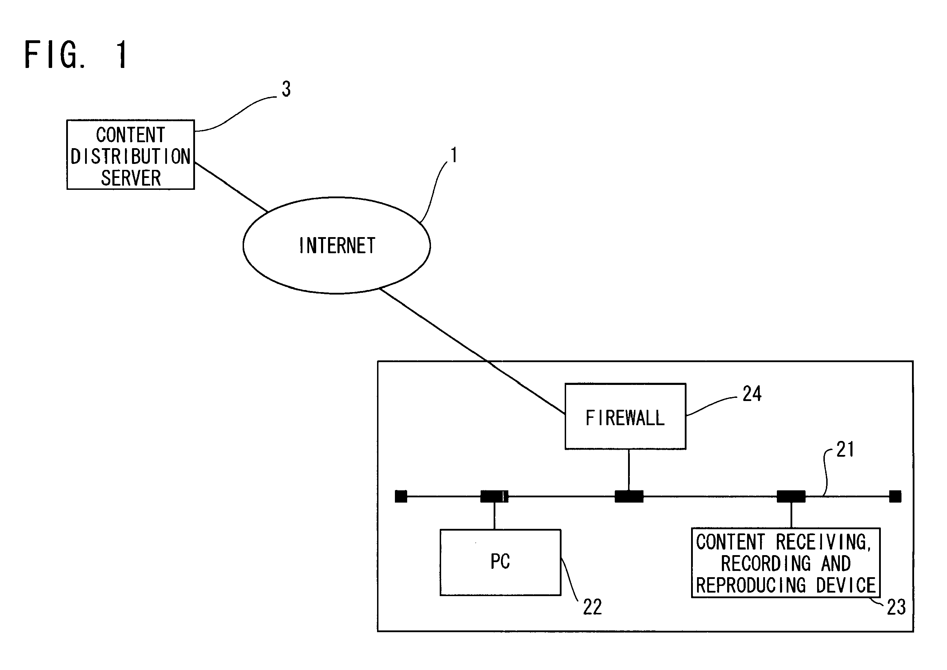

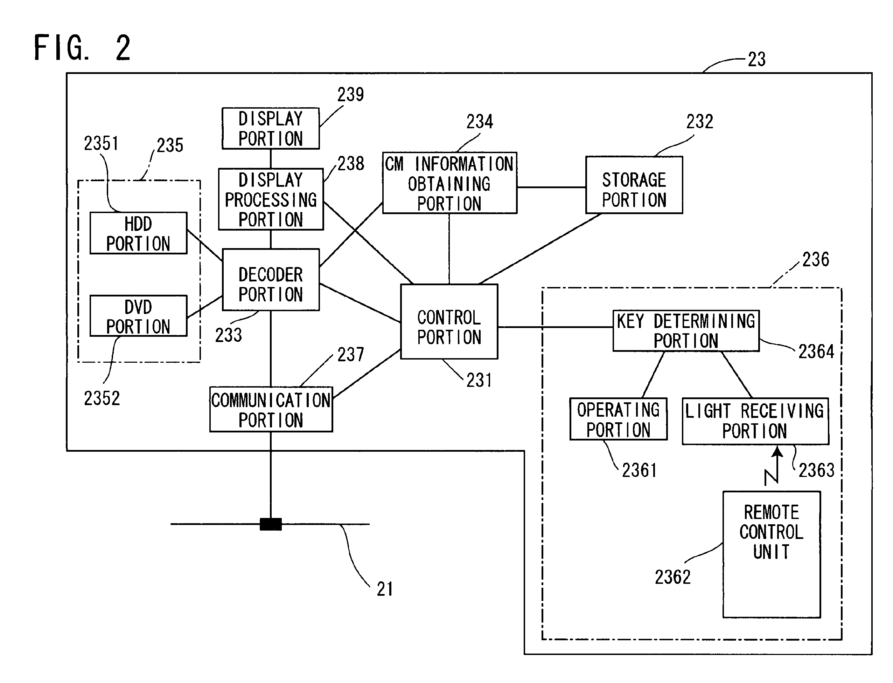

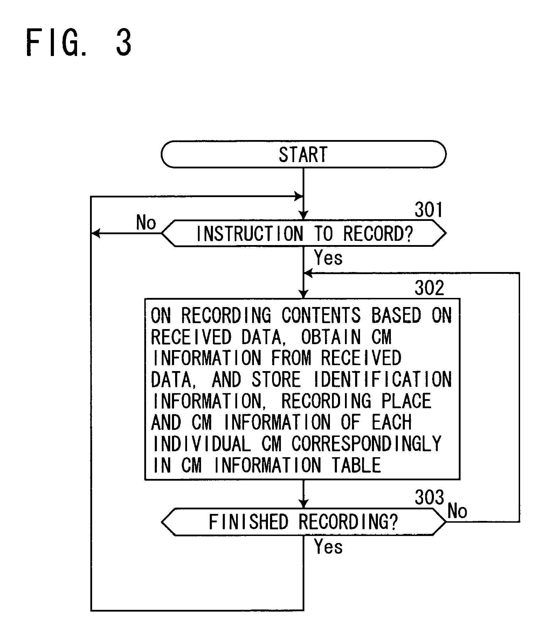

FIG. 1 is a block diagram showing an overview of a configuration of a content distribution system according to this embodiment, and FIG. 2 is a block diagram showing an overview of the configuration of a content receiving, recording and reproducing device configuring the system. FIGS. 3 to 5 are flowcharts showing an overview of operations of the content receiving, recording and reproducing device as to the present invention.

As shown in FIG. 1, the content distribution system of this embodiment is configured by connecting via an Internet 1 (and a firewall 24) a content distribution server 3 for distributing the contents with a content receiving, recording and reproducing device 23 connected to an in-home LAN 21. While the components are described one by one in the drawings for the sake of simplification, there may be a plurality of each individual component (there are normally a plurality).

The content distribution server 3 distributes the contents (contents including a commercial) via the Internet 1 according to a request from the content receiving, recording and reproducing device 23. The contents are distributed by so-called streaming distribution, whereby video and audio data (video data on a program main part and video data on a CM) and various kinds of information are packetized (according to a predetermined streaming method) with an encoder and sent to the content receiving, recording and reproducing device 23 via the Internet 1. The "various kinds of information" added to (associated with) the video and audio data are information indicating the contents of the main part (its title and genre for instance) and time information (length of the main part portion and broadcast time information in the case of live distribution) for instance. According to the present invention, CM information indicating the contents of the commercial (merely referred to as a CM hereafter) is also added and distributed.

The CM information is the information on each individual CM included in the distributed contents. It may be title information, genre information, product information, company information, performer information, BGM information, length (time) information or inserted place information (what location of the main part it is inserted in) on the CM for instance.

FIG. 2 is a block diagram showing an overview of the configuration of the content receiving, recording and reproducing device 23 as to the portion relating to the present invention. As shown in FIG. 2, the content receiving, recording and reproducing device 23 includes a control portion 231 for controlling the entire device and performing various kinds of arithmetic processing and the like, a storage portion 232, a decoder portion 233 for performing a decoding process of received streaming data and the like, a CM information obtaining portion 234 for obtaining the CM information from the received data, a medium recording and reproducing portion 235 consisting of an HDD portion 2351 for recording and reproducing the data on an HDD as an information recording medium and a DVD portion 2352 for recording and reproducing the data on a DVD as an information recording medium, an operating portion 236 as an input interface for a user (configured by a main operating portion 2361, a remote control unit 2362, a light receiving portion 2363 for receiving a signal from the remote control unit 2362, and a key determining portion 2364 for determining signal contents from the main operating portion 2361 or the light receiving portion 2363), a communication portion 237 for sending and receiving the data to and from the in-home LAN 21, a display processing portion 238 for displaying the video data outputted from the decoder portion 233 on a display portion 239, the display portion 239 and the like.

An overview of the operations of the content receiving, recording and reproducing device 23 configured as above relating to the present invention will be described with reference to FIGS. 3 to 5. FIG. 3 shows an overview of a process in the case of recording the contents distributed from the content distribution server 3 on the information recording medium (HDD or DVD).

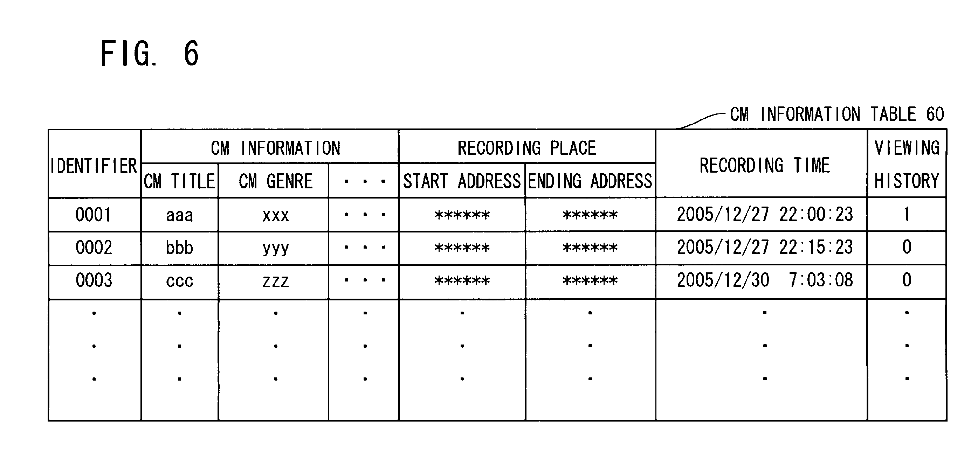

When there is a request from the user for recording of the contents by operating the operating portion 236 (step 301), a recording process of the contents requested to record (process of sending out a distribution request for the contents to the content distribution server 3, receiving the aforementioned packetized data and decoding it to record it on the information recording medium) is performed. In this recording process, the received data received by the communication portion 237 is decoded by the decoder portion 233 to record the contents (video and audio data having undergone conversion of its data format and the like as required) on the information recording medium (HDD or DVD) while extracting the CM information from the received data with the CM information obtaining portion 234, providing an identifier to each individual CM portion and on recording each individual CM portion (video and audio data on the CM) on the information recording medium, storing the recording place correspondingly to the CM information, identifier and recording time information relevant to the CM portion in a CM information table to be stored in the storage portion 232 (step 302). FIG. 6 shows an example of the overview of the configuration of the CM information table. A CM information table 60 has a viewing history flag of each individual CM (indicating unviewed in the case of "0" and indicating viewed in the case of "1") stored therein, where "0" is assigned to a newly recorded CM portion (if determined that the CM is viewed simultaneously with the recording process (the CM being recorded is displayed in the display portion 239), "1" may be assigned).

When the recording of the contents is finished (such as when the operating portion 236 is given an instruction from the user to finish the recording or when the recording of the contents given a recording instruction is finished) (step 303), the recording process is finished so as to return to the step 301 and repeat the process (wait for a next recording request).

In the case where the contents including the CM are received and recorded by the recording process described above, the identifier is added to each individual CM portion (if there is information usable as identification information in the CM information distributed from the content distribution server 3, it may be used). This is stored in the CM information table 60 correspondingly to the recording place information (any information capable of identifying the CM portion, such as address information on the information recording medium or relative position information (time information) to a reference point such as a content start time point), CM information, viewing history flag and the like.

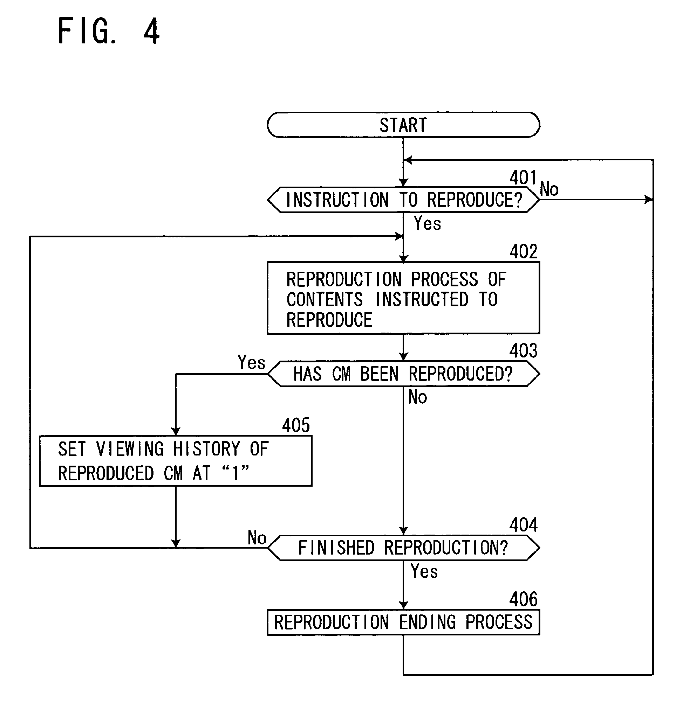

Next, a description will be given with reference to FIG. 4 as to an overview of the processing of the content receiving, recording and reproducing device 23 in reproducing the contents recorded on the information recording medium (HDD or DVD).

When there is a request from the user for reproduction of the contents by operating the operating portion 236 (step 401), the contents requested to be reproduced is reproduced (step 402). In the case where, in conjunction with the reproduction process of the contents, it is determined that each individual CM portion included therein has been reproduced (this determination is made by obtaining the recording place of the CM from the CM information table 60 stored in the storage portion 232 with the control portion 231 and determining whether or not the data of the recording place has been reproduced) (step 403), the viewing history flag relevant to each individual CM portion of the CM information table 60 is set at "1" (step 405). When the reproduction of the contents is finished (such as when the operating portion 236 is given an instruction from the user to finish the reproduction or when the reproduction of the contents given a reproduction instruction is finished) (step 404), the content reproduction process is finished (step 406) so as to return to the step 401 and repeat the process (wait for a next reproduction request). As for the method of determining whether or not "the CM portion has been reproduced," it can be determined as appropriate, such as "determining that 'the CM portion has been reproduced' only in the case where the entirety of the CM portion has been reproduced in the same size," "determining that 'the CM portion has been reproduced' in the case where a part (80 % or more for instance) of the CM portion has been reproduced in the same size" or "determining that 'the CM portion has been reproduced' in the case where reproduction other than skipping (such as fast-forwarding) has been performed."

As a result of the reproduction process described above, the viewing history of the "CM portion" recorded on the information recording medium is stored in the CM information table 60 (possible to determine the CM yet to be viewed due to skipping).

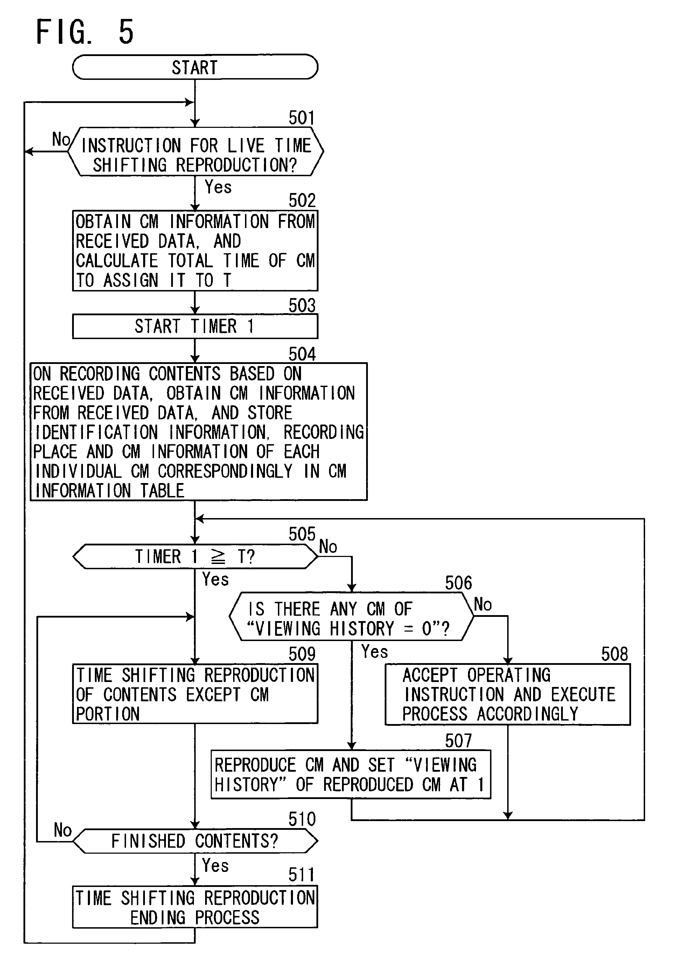

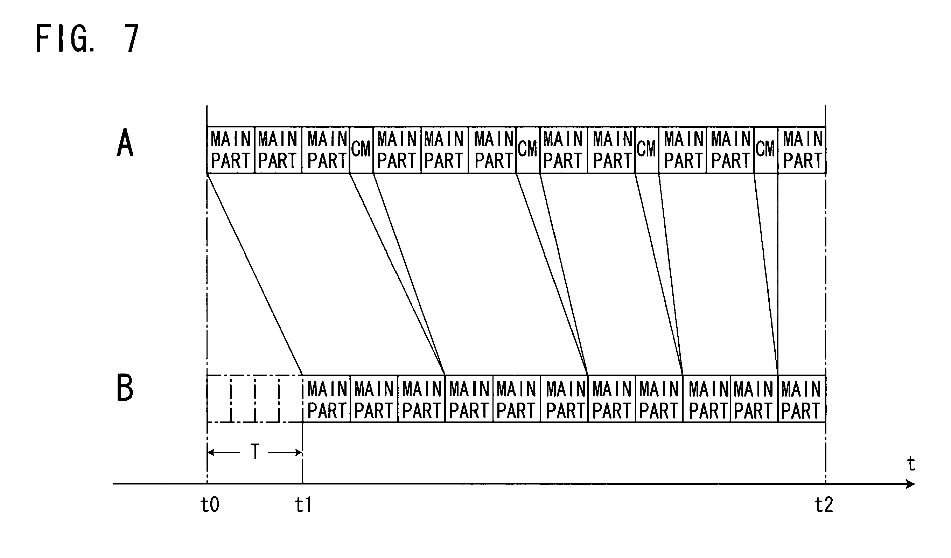

FIG. 5 is a flowchart showing an overview of a live time shifting reproduction process on the content receiving, recording and reproducing device 23. The "live time shifting reproduction" means to use a time shifting reproduction function for so-called live-distributed (real-time distributed) contents so as to have only the main part continuously viewed and finish the time shifting reproduction of only the main part almost at the same time as the ending time of distribution of the live-distributed contents (the ending time of the broadcast). FIG. 7 shows a diagram for describing a concept of the "live time shifting reproduction." Part A of FIG. 7 shows the contents sequentially live-distributed from the content distribution server 3, and Part B of FIG. 7 shows the portion of "the time shifting reproduction of only the main part" by the "live time shifting reproduction." As is evident from the drawings, the "live time shifting reproduction" "finishes the time shifting reproduction of only the main part almost at the same time as the ending time of the broadcast." Thus, the reproduction of the main part is started later than the live distribution by the total time of the CM included in the contents (T in FIG. 7). However, they end almost at the same time (t2 in FIG. 7) so as to implement "continuous reproduction of the main part except the CM portion" as soon as possible.

When there is a request for implementing the "live time shifting reproduction" (step 501), the CM information obtaining portion 234 extracts the CM information from the received data and calculates the total time of the CMs included in the contents to be viewed from the CM information so as to assign this to a variable T and store it in the storage portion 232 (step 502). In a subsequent step 503, a timer 1 is started by the control portion 231 having a timer function. A step 504 is the same processing concept as the step 302 of FIG. 3, where the contents are recorded and the CM information table 60 is updated. While the contents are recorded and the CM information table 60 is updated, it is determined whether or not the timer 1 has reached T (whether it has reached t1 in FIG. 7) (step 505). If the timer 1 has not reached T, it is determined by referring to the CM information table 60 whether or not there is the CM of which viewing history flag is 0 on the information recording medium (step 506). If there is one, the unviewed CM is reproduced to set the viewing history flag of the reproduced CM at 1 (step 507). If determined that there is no unviewed CM (there is no CM of which viewing history flag is 0), an arbitrary operation from the user is accepted so as to perform the process accordingly (such as reproduction of other contents recorded on the information recording medium) (step 508).

If determined that the timer 1 reached T (step 505) while reproducing the unviewed CM in the step 507 or while executing the other processes (step 508), the time shifting reproduction of the contents (continuous reproduction of the main part except the CM portion) is performed (step 509). When the contents come to an end (t2 in FIG. 7) (step 510), the time shifting reproduction is finished (step 511) so as to return to the step 501 and repeat the processing. As for the main part (such as the video data recorded on the information recording medium) of which time shifting reproduction of the step 509 is finished, it may be either deleted at any time from the information recording medium or not deleted. As for the CM portion skipped by the "live time shifting reproduction," however, it is recorded as the unviewed CM on the information recording medium to reproduce it in excess time (a period of t0 to t1 in FIG. 7) of the next "live time shifting reproduction" (it may also be automatically deleted on finishing the reproduction).

In the case where there are multiple unviewed CMs in determining whether or not there is any unviewed CM in the step 506, they may be reproduced as follows. For instance, they may be selected at random and reproduced, reproduced in order from the one having an old (or new) recording time or reproduced in order from the one of a related genre according to the genre of the contents subject to the time shifting reproduction. It is also possible, by obtaining and retaining the preference information on the user in advance, to reproduce them in order from the one matched or related to the preference information (or only the one related thereto) (thus, the CM matched to the preference of the user is reproduced as a convenience to the user, and the preference information is held by the content receiving, recording and reproducing device 23 to select the CM to be reproduced with the content receiving, recording and reproducing device 23 so that the load on the server is reduced and there is also an advantage from the viewpoint of protecting personal information on the user in comparison to the case of transmitting the preference information to the server to select the CM on the server side).

As described above, according to this embodiment, the "continuous reproduction of the main part except the CM portion" of the live-distributed contents is implemented as soon as possible. Therefore, it is possible to satisfy as much as possible both the desires of the user to "view only the main part continuously by skipping the CM portion" and "view the program as soon as possible." Each individual CM portion recorded on the information recording medium is managed correspondingly to the viewing history information (viewing history flag), and the unviewed CM is reproduced in the excess time (the period of t0 to t1 in FIG. 7) of the "live time shifting reproduction" so that viewing of the unviewed CM is also urged.

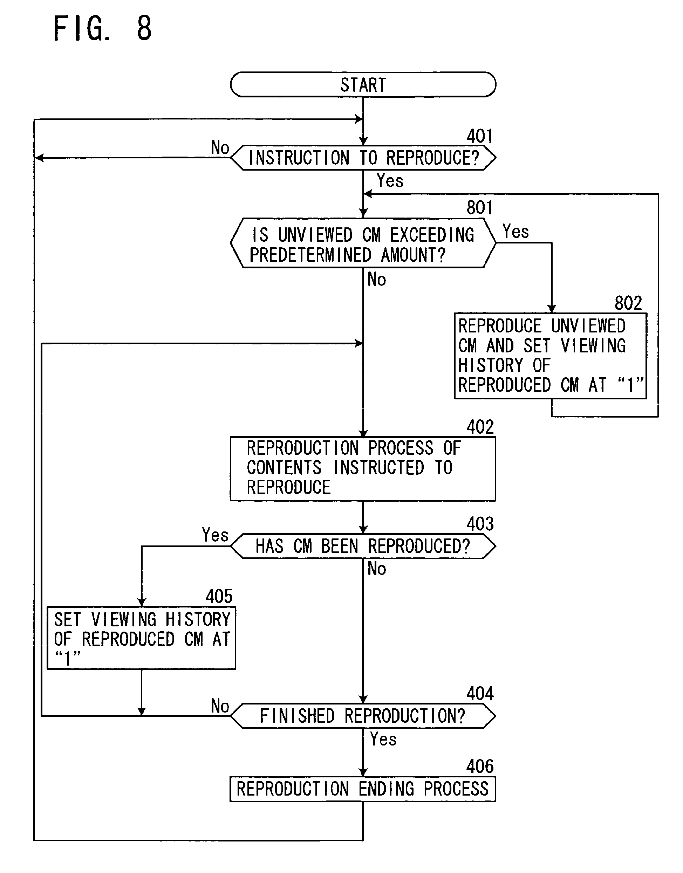

FIG. 8 shows an overview of another process of reproducing the contents recorded on the information recording medium. The same symbols as FIG. 4 are used as to the same processing concept as FIG. 4. Thus, in the case where the unviewed CMs are exceeding the predetermined amount ("the number of the commercials," "length of the commercials (time information)" or the like determined from the CM information table 60 is exceeding the predetermined amount (it may be 0)) when there is a request for reproduction of the contents (step 801), it is possible to forcedly reproduce the unviewed CMs (step 802) and reproduce the contents specified when the unviewed CMs are less than the predetermined amount so as to further urge viewing of the unviewed CMs. It is also possible to prevent the CMs from remaining unviewed for a long time by determining "whether or not there is any unviewed CM of which recording time is older than a predetermined time" in the step 801. In FIG. 8, the unviewed CMs are reproduced before reproducing the specified contents. It is also possible, however, to reproduce the unviewed CMs after reproducing the contents.

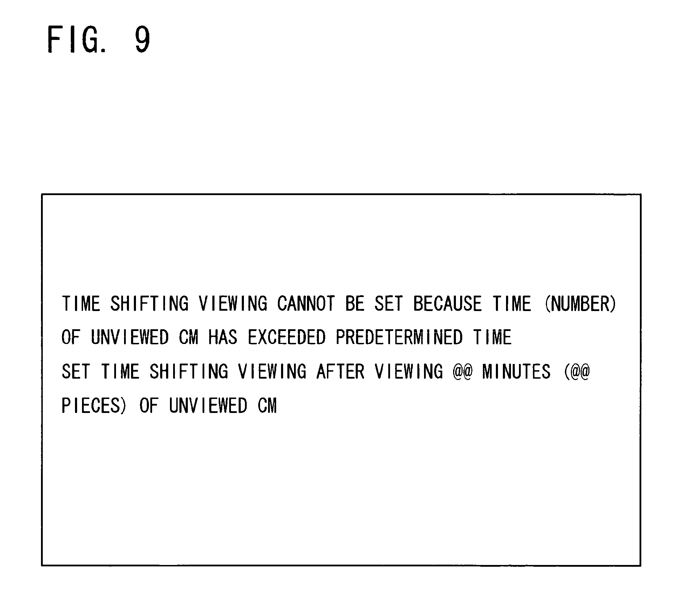

It is also possible to determine whether or not the unviewed CMs are exceeding the predetermined amount in the "live time shifting reproduction" (processing in FIG. 5) and limit execution of the "live time shifting reproduction" in the case where the predetermined amount is exceeded. In the process of FIG. 8, "the unviewed CMs are forcedly reproduced" as limitation on execution of the "reproduction of the specified contents." It is also possible, however, to display a warning shown in FIG. 9 (the warning may be displayed either without reproducing the contents or while displaying a reproduction screen of the contents) for instance so as to urge viewing of the unviewed CMs.

In FIG. 1, a personal computer (PC) 22 and the content receiving, recording and reproducing device 23 are separately described. This merely shows the devices provided to the in-home LAN 21 by way of example, which does not indicate that the content receiving, recording and reproducing device is conceptually different from the PC (the PC may be the "content receiving, recording and reproducing device" of the present invention).

Part A of FIG. 7 shows an example of the configuration of the contents distributed from the content distribution server 3. However, it is not limited to the distribution in the form having the CM inserted into the main part but the main part and the CM may also be separately distributed. In the case of recording on the information recording medium of the content receiving, recording and reproducing device 23, the recording may be performed either in the form having the CM inserted into the main part or by separately recording the main part and the CM. As this embodiment is intended to "exert control to grasp the viewing situation of the received and recorded CM portions and urge viewing of the unviewed CMs," it does not matter whether or not the main part and the CM are separately distributed or recorded.

### [Second Embodiment]

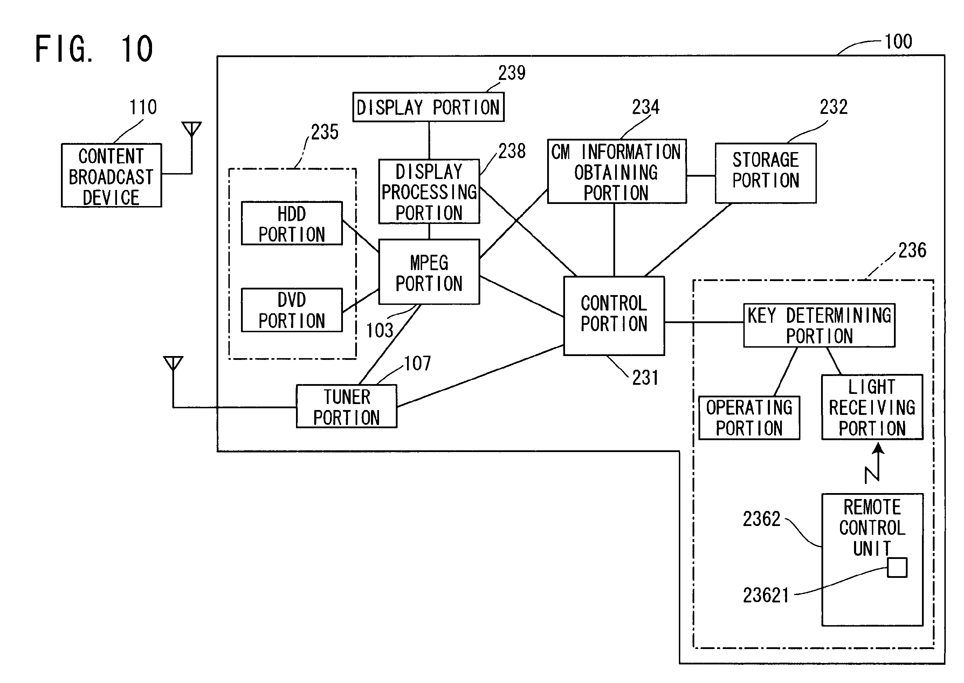

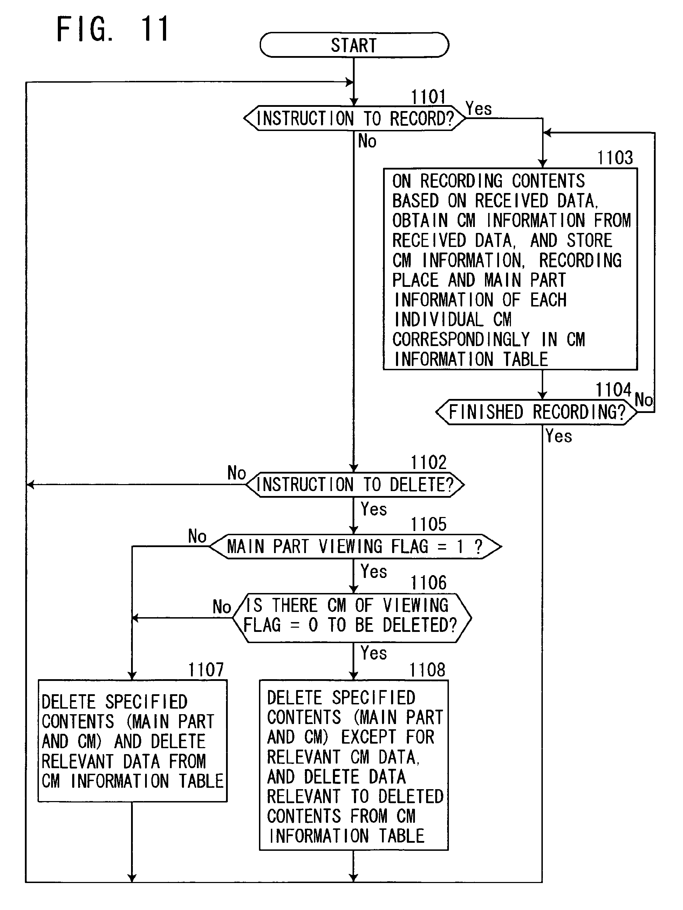

FIG. 10 is a block diagram showing an overview of the configuration of the content distribution system according to this embodiment. As for a content receiving, recording and reproducing device 100 configuring the content distribution system, the same components as those of the first embodiment (FIG. 2) are given the same symbols and a description thereof will be omitted or simplified here. FIGS. 11 to 13 are flowcharts showing an overview of the operations of the content receiving, recording and reproducing device as to the present invention.

As shown in FIG. 10, the content distribution system of this embodiment is configured by a content broadcast device 110 for distributing the contents and the content receiving, recording and reproducing device 100. The content broadcast device 110 distributes the contents (contents including a commercial) by means of so-called digital broadcasting (a terrestrial broadcast, a satellite broadcast or the like). The distribution is performed by digital-modulating the data having a content video (a video of the program main part or a video of the CM) encoded according to the MPEG standards and various kinds of data and transmitting them on a broadcast wave. The various kinds of data added to (associated with) the content video are the information indicating the contents of the main part (such as a title and a genre) and the time information (such as the length of the main part portion and broadcast time information) for instance. According to the present invention, the CM information indicating the contents of the CM is also added and distributed. The "contents including a commercial" is not limited to the form having the CM inserted into the contents to be distributed. The "contents including a commercial" may also be the form having some association between the main part portion of the contents and the commercial portion even in the case where the main part portion and the CM portion are separately distributed (they are mutually associated by using the various kinds of data added to them respectively for instance).

The CM information is the information on the CM included in the contents to be distributed. It may be title information, genre information, product information, performer information, length (time) information, main part information (information on the main part having the CM inserted therein), inserted place information (what location of the main part it is inserted in) or broadcast time information on the CM for instance. According to this embodiment, the identification information (identifier) is provided to each individual CM to manage these kinds of information correspondingly on the content broadcast side. It is thereby possible to determine what the CM is like with the identifier. The "CM information" distributed on the broadcast wave from the content broadcast device 110 is the data on the identifier.

As with the content receiving, recording and reproducing device 23 of the first embodiment (FIG. 2), the content receiving, recording and reproducing device 100 includes a control portion 231, a storage portion 232, a CM information obtaining portion 234, a medium recording and reproducing portion 235, an operating portion 236, a display processing portion 238, a display portion 239 and the like, and also includes a tuner portion 107 for receiving digital broadcast waves of frequencies and an MPEG portion 103 for performing a digital demodulation process, a decoding process according to the MPEG standards and the like to a signal received by the tuner portion 107.

A description will be given with reference to FIGS. 11 to 13 as to the overview of the operations of the content receiving, recording and reproducing device 100 as regards the present invention. FIG. 11 shows an overview of the processing of recording or deleting the contents distributed from the content broadcast device 110 on the information recording medium (HDD or DVD).

When there is a request from the user for recording of the contents (step 1101), a recording process of the contents requested to record is performed. In this recording process, a digital broadcast signal received by the tuner portion 107 is digital-demodulated by the MPEG portion 103 to record the contents (video and audio data having undergone conversion of its data format and the like as required) on the information recording medium (HDD or DVD) while extracting the CM information (CM identifier) from the received data with the CM information obtaining portion 234. When recording each of the CM portions (video and audio data on the CM) on the information recording medium, it is recorded correspondingly to the recording place, CM identifier and recording time information in the CM information table to be stored in the storage portion 232. These pieces of information are stored in the CM information table correspondingly to the information on the main part associated with the CM (information on the identifier given to the main part and the recording place) (step 1103). When recording the CM portion on the information recording medium, the CM portion is detected by an appropriately adoptable method (such as detecting a change in an audio signal and determining it as the CM portion) (while the "CM information" is the CM identifier in this embodiment, the CM inserted place information other than the CM identifier may be added as the CM information so as to detect the CM portion based on the information).

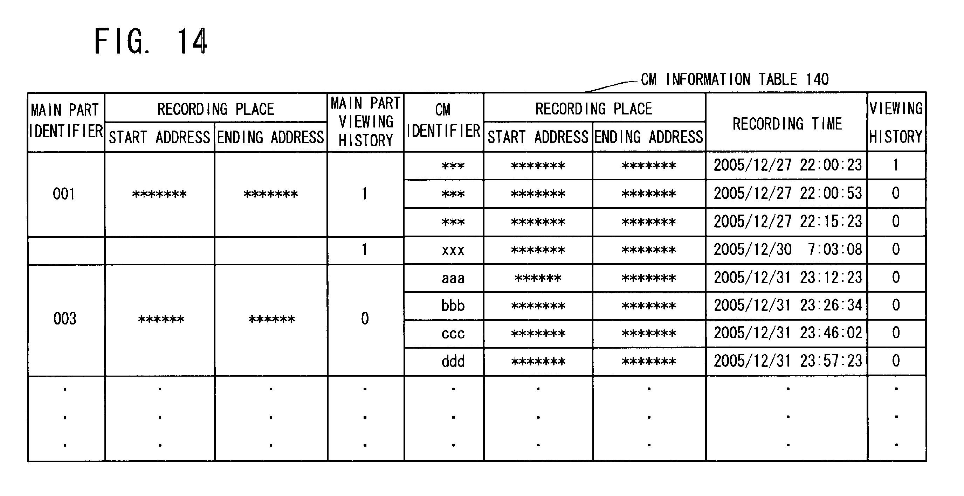

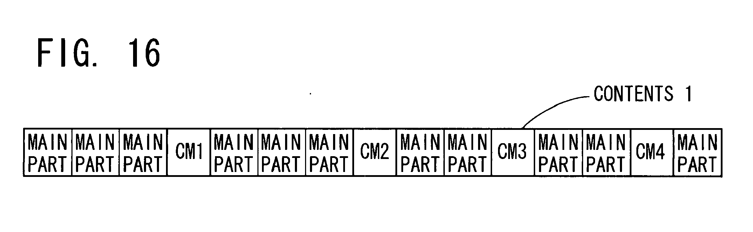

FIG. 14 shows an example of the overview of the configuration of the CM information table. A CM information table 140 has the viewing history flag of each individual CM and a main part viewing history flag of the main part associated with each individual CM (indicating unviewed in the case of "0" and indicating viewed in the case of "1" respectively) stored therein, where "0" is assigned to the main part and CM portion to be newly recorded (if determined that the CM is viewed simultaneously with the recording process (the contents being recorded is displayed in the display portion 239), "1" may be assigned). For instance, if FIG. 16 is the contents requested to record (contents 1 with four CMs inserted) and is to be recorded in this format (in a state of having the CMs inserted into the main part) on the information recording medium, a main part identifier ("003" for instance) is given to the contents 1 by the content receiving, recording and reproducing device 100, which is stored in the CM information table 140 correspondingly to the main part viewing history flag and the recording place information on the entire contents 1 as the "recording place information on the main part." Furthermore, the CM identifier (the "CM information" provided and transmitted by the broadcasting side, which is aaa to ddd in FIG. 14), recording place, recording time and viewing history flag of each of the CMs (the CMs 1 to 4 included in the contents 1) are stored in the CM information table 140 in association with the main part identifier.

On finishing the recording of the contents (such as when the operating portion 236 is given an instruction from the user to finish the recording or when the recording of the contents instructed to record finishes) (step 1104), the recording process is finished to return to the step 1101 and repeat the processing.

When there is a request from the user for deletion of the contents (step 1102), the contents requested to delete are deleted from the information recording medium (HDD or DVD). In the deletion process, it is determined by referring to the CM information table 140 whether or not the main part viewing history flag of the contents to be deleted is 1 (step 1105). In the case where the main part viewing history flag is 1, it is determined by referring to the CM information table 140 whether or not there is a CM having the viewing history flag of 0 and associated with the main part identifier of the contents to be deleted (step 1106) . In the case where the determination of the step 1105 is negative (determined that the main part has not been viewed yet) or in the case where the determination of the step 1106 is negative (determined that there is no unviewed CM in the contents to be deleted), the specified contents are deleted (deleting the video data from the information recording medium and deleting the data from the CM information table 140) (step 1107). In the case where the determinations of the steps 1105 and 1106 are affirmative (the main part has been viewed and there is an unviewed CM), the contents are deleted except for the unviewed CM (step 1108).

When instructed to delete the contents 1 of FIG. 16 (the main part identifier is 003) from the information recording medium for instance, the data on the entire contents (including the CMs 1 to 4) is deleted and the data is also deleted from the CM information table 140 if the main part viewing history flag associated with the main part identifier 003 is 0 (or if all the viewing history flags of the CMs 1 to 4 are 1 even in the case where the main part viewing history flag is 1) (step 1107). In the case where the main part viewing history flag associated with the main part identifier 003 is 1 and only the viewing history flag of the CM 4 is 0 for instance, the data on the contents 1 is deleted except for the data on the CM 4 (leaving the data on the CM 4) and the relevant data is also deleted from the CM information table 140 except for the CM 4 (CM identifier ddd). The portion of the "CM yet to be viewed while the main part has been viewed" is not deleted by such a process even in the case where there is a request for deletion of the contents. According to this embodiment, when performing a content deletion process, the main part identifier information and main part recording place information are deleted from the CM information table 140 whether or not there is any unviewed CM (thus, the data such as a CM identifier xxx of FIG. 14 remains in the case where there is the "CM yet to be viewed while the main part has been viewed"). Thus, it is possible, by referring to the CM information table 140, to determine that a corresponding main part is a deleted CM.

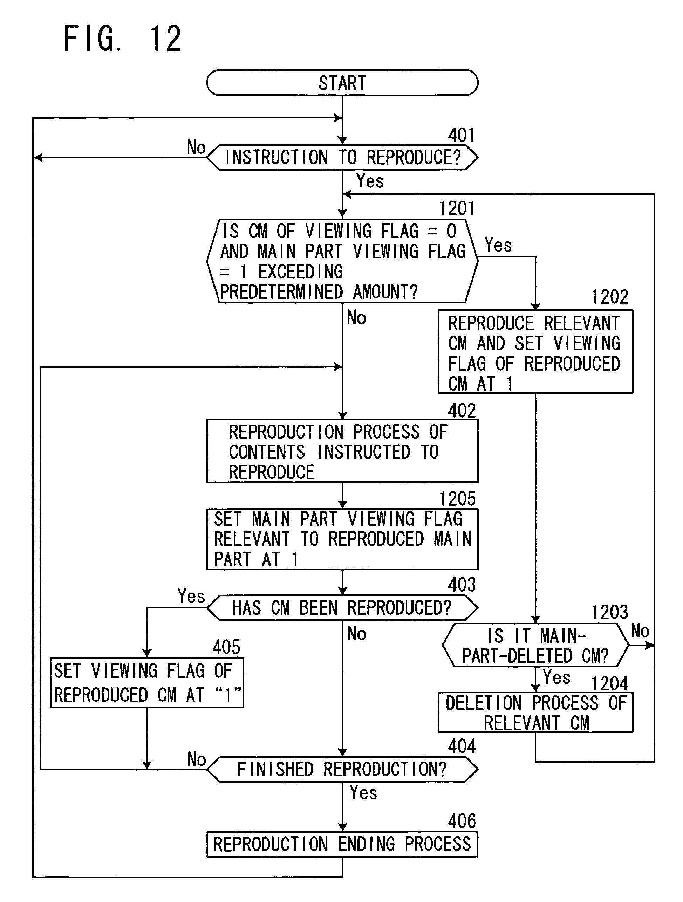

Next, a description will be given with reference to FIG. 12 as to an overview of the processing of the content receiving, recording and reproducing device 100 in reproducing the contents recorded on the information recording medium (HDD or DVD). As for the same processing concept as the first embodiment (FIG. 4), the same symbols are used and a description thereof will be omitted or simplified here.

When there is a request for reproduction of the contents (step 401), it is determined by referring to the CM information table 140 whether or not the "CM yet to be viewed while the main part has been viewed" is exceeding the predetermined amount (it may be 0) (step 1201). If determined that the predetermined amount is not exceeded, the contents requested to reproduce are reproduced (step 402). In a subsequent step 1205, the main part viewing history flag relevant to the reproduced contents of the CM information table 140 is set at 1 (unchanged in the case where it is already 1).

In the case where the "CM yet to be viewed while the main part has been viewed" is more than the predetermined amount, the "CM yet to be viewed while the main part has been viewed" is reproduced to set the viewing history flag relevant to the reproduced CM of the CM information table 140 at 1 (step 1202). In the case where the reproduced CM is a "main-part-deleted CM" (determinable by referring to the CM information table 140 as previously described) (step 1203), the CM is deleted (the video data is deleted from the information recording medium, and the relevant data is deleted from the CM information table 140) (step 1204). The processing from the step 403 onward is the same concept as the first embodiment (FIG. 4).

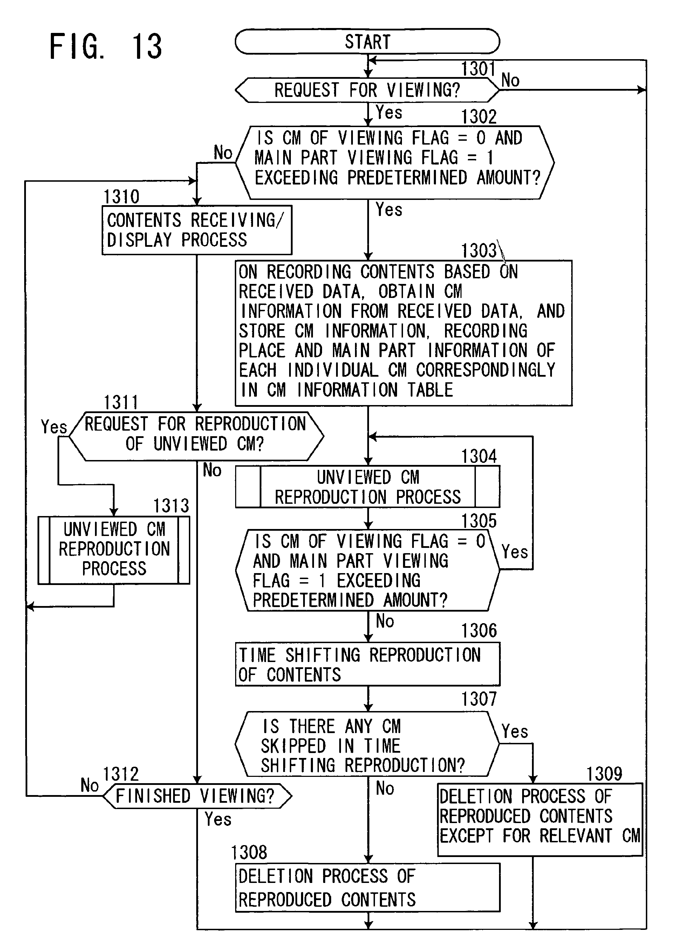

Next, a description will be given with reference to FIG. 13 as to an overview of the processing of the content receiving, recording and reproducing device 100 in viewing the contents on air.

When there is a request for viewing (step 1301), it is determined by referring to the CM information table 140 whether or not the "CM yet to be viewed while the main part has been viewed" is exceeding the predetermined amount (step 1302). If determined that the predetermined amount is exceeded, the processing of the steps 1303 to 1309 is performed. This processing performs reproduction (viewing) of the "CM yet to be viewed while the main part has been viewed" until it becomes less than the predetermined amount, and then executes the time shifting reproduction of the contents requested to view (reproduction of the contents from the time point of the request for viewing). The step 1303 performs the recording process of the contents on air (the contents requested to view) in order to perform the time shifting reproduction, which is the same concept as the step 1103 of FIG. 11. A subsequent step 1304 is a process of reproducing the "CM yet to be viewed while the main part has been viewed," which is the same concept as the steps 1202 to 1204 of FIG. 12. Thus, in the case where the "CM yet to be viewed while the main part has been viewed" becomes less than the predetermined amount (step 1305), the time shifting reproduction of the contents (reproduction of the contents from the time point of the request for viewing) is executed (step 1306). The contents of which reproduction is finished (such as the video data recorded on the information recording medium) are deleted. In the case where there is a CM skipped during the time shifting reproduction (that is, a CM relevant to the "CM yet to be viewed while the main part has been viewed"), it is left (steps 1307 to 1309).

In the case where the determination of the step 1302 is negative, a content viewing process (normal viewing) is executed (step 1310). In the case where there is an input of an unviewed CM reproducing button 23621 provided to the remote control unit 2362 while viewing the contents (step 1311), the unviewed CM is reproduced (step 1313: the same concept as the steps 1202 to 1204 of FIG. 12) so as to return to the step 1301 and repeat the processing when the viewing is finished (step 1312).

As described above, in the case where, according to this embodiment, the user views the contents 1 by skipping the CMs 2 and 3 on the content receiving, recording and reproducing device having recorded the CMs 1 to 4 inserted into the contents 1 for instance, the CMs 2 and 3 are stored correspondingly to the information to the effect of the "CM yet to be viewed while the main part has been viewed." The reproduction or viewing of the contents is limited if determined that the amount of such CMs exceeds the "predetermined amount." Therefore, it is possible to urge the user to view the CM, and the user can use the CM skip function freely until the unviewed CMs reach the "predetermined amount." For this reason, it is possible to prevent convenience for the user from being impaired while preventing the advertising effects of the CM from being reduced. As the CM inserted into the program of which main part is yet to be viewed remains yet to be viewed in the case of simply leaving only the viewing history of the recorded CMs, some limit of viewing may be imposed (it is unreasonable to be forced to view the CM if the main part has not been viewed). According to the configuration, however, it is possible to determine the CM "yet to be viewed while the main part has been viewed" so as to prevent occurrence of the situation described above which is unreasonable for the user.

Furthermore, even when the user provides an instruction to delete the contents (together with the CM associated therewith) recorded on the information recording medium, the CM portion is left on the information recording medium in the case where the CM associated with the contents falls under the "CM yet to be viewed while the main part has been viewed." Therefore, it is possible to urge viewing of the unviewed CM more securely.

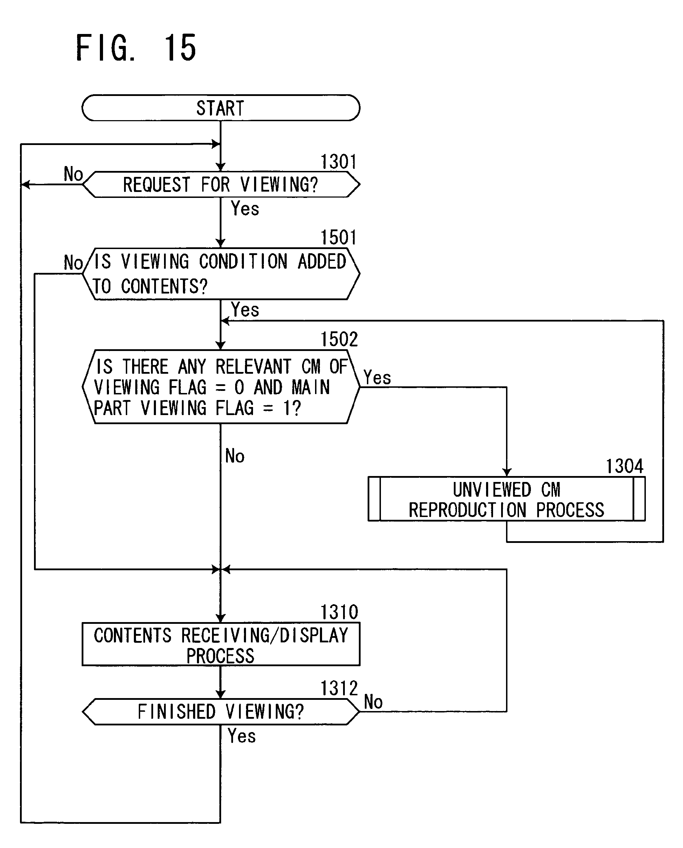

FIG. 15 shows an overview of another process of the content receiving, recording and reproducing device 100 in viewing the contents on air. The same symbols as FIG. 13 are used as to the same processing concept as FIG. 13. This is the process in the case where a content viewing condition is added to the data transmitted from the content broadcast device 110. The "content viewing condition" is the information transmitted by a broadcaster side correspondingly to the transmitted contents for the sake of imposing a certain viewing limit to the contents, for which the CM information is used according to the present invention. To be more specific, the broadcaster side transmits the CM information (CM identifier) as the "content viewing condition" correspondingly to the contents of which viewing should be limited. The content receiving, recording and reproducing device having received this determines whether or not the "content viewing condition" (CM identifier) is added to the contents (step 1501). In the case where there is the "content viewing condition," it refers to the CM information table 140. And if there is the CM "yet to be viewed while the main part has been viewed" relevant to the CM identifier (step 1502), it reproduces the CM (step 1304) so as to have the contents viewed after the CM "yet to be viewed while the main part has been viewed" relevant to the "content viewing condition" is eliminated (step 1310).

According to the configuration, it is possible, by appropriately selecting the CM identifier as the "content viewing condition," to condition the user to view the CM of the company A in order to view the contents A for instance (there is no CM of the company A among the unviewed CMs) (the broadcaster side controls the CM identifiers, and the CM identifiers used as the "content viewing conditions" can be appropriately combined to create a variety of conditions). Therefore, it is possible for the sponsor side (broadcaster side) to select and set up the CMs to be viewed by the user more flexibly (for instance, adding number information as the "content viewing condition" in addition to the CM identifier to impose various conditions so that up to five CMs out of a1 to a10 may be yet to be viewed, or a CM a7 may be yet to be viewed up to twice for instance).

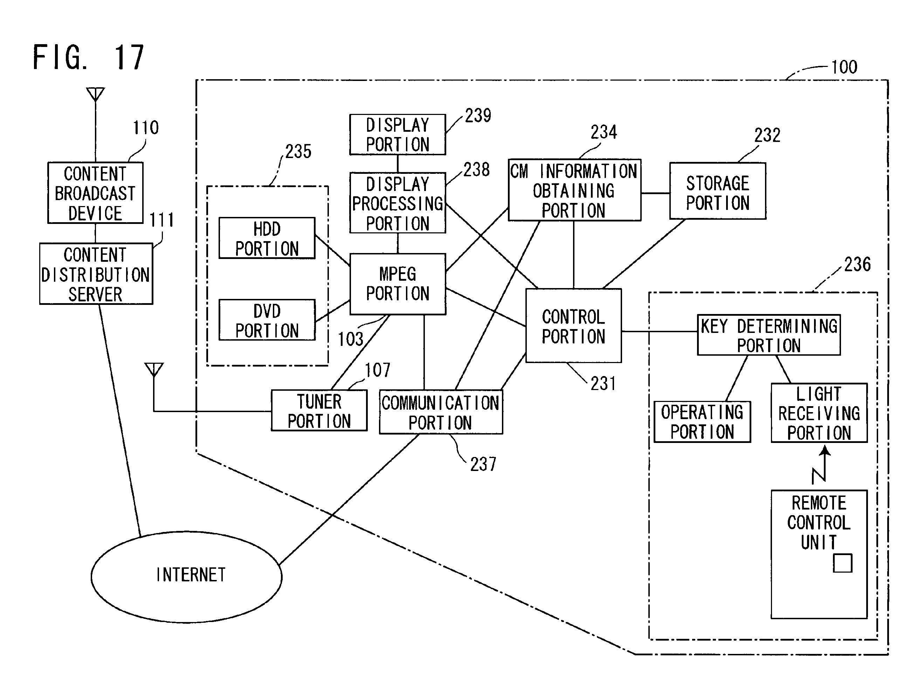

This embodiment described that the "CM information" distributed on the broadcast wave transmitted from the content broadcast device 110 is only the data on the identifier. However, it may also be transmitted by adding various kinds of information (product information, performer information and the like). These kinds of information are not limited to the information distributed on the broadcast wave transmitted from the content broadcast device 110. As shown in FIG. 17, it may also be the information transmitted from the content distributor side to the content receiving, recording and reproducing device via the Internet (such as obtaining various kinds of information from a content distribution server 111 via the Internet based on the CM identifier distributed on the broadcast wave) for instance.

The embodiments described the concepts of the present invention by allocating them to the functions. However, the present invention is not limited thereto. It is also possible, for instance, to apply the "live time shifting reproduction function" described in the first embodiment to the second embodiment (it is required to appropriately transmit necessary information from the content broadcast device 110) or perform "the unviewed CM reproduction process by the input of the unviewed CM reproducing button by the user" in the content viewing process of FIG. 13 during "the content reproduction process" or during execution of the "live time shifting reproduction function" so as to use the concepts by appropriately combining them in conformance with the above-mentioned purpose of the present invention.

The embodiments described the "information recording medium" by using the HDD and DVD as the concrete examples thereof. However, it may also be another disk medium (such as a VCD, a DVA or a CD) or a semiconductor memory. In the case of a random-accessible recording medium such as the above described disk medium or semiconductor memory, the problem of reduction in advertising effects due to a "CM skip" is conspicuous, and so it is particularly effective to apply the present invention. As for a magnetic tape medium for instance, it is possible to provide a function of "detecting and fast-forwarding the CM portion." In such a case, the "reduction in advertising effects" is caused and so it is meaningful to apply the present invention (application of the present invention is not limited to the "random-accessible recording medium"). In addition, the "content receiving, recording and reproducing device" of the present invention is not limited to the device such as a DVD recorder but refers to a device "capable of recording the distributed contents on an information recording medium and reproducing them, " which may be a device also having another function (such as a TV set with a built-in HDD, a portable terminal device such as a cellular phone, a personal computer or the like).

## Claims

1. A content distribution system comprising:
a content distribution device for distributing contents associated with a commercial; and
a content receiving, recording and reproducing device capable of receiving the distributed contents and recording the received contents on an information recording medium, and **characterized in that**:
when distributing the contents associated with a commercial from the content distribution device, the contents are transmitted after adding commercial information indicating the contents of the commercial;
when the content receiving, recording and reproducing device receiving the contents records the contents on the information recording medium, each individual commercial portion associated with the contents is given identification information to be stored correspondingly to a recording place of the commercial portion and the commercial information;
in the case where, on reproducing the contents recorded on the information recording medium, it is determined that there is a commercial portion associated with the contents to be reproduced, the identification information corresponding to the commercial portion is stored correspondingly to main part viewing history information indicating that a main part has been viewed; and
in the case where it is determined that the commercial portion recorded on the information recording medium has been reproduced, viewing history information indicating that the commercial portion has been viewed is stored correspondingly to the identification information given to the commercial portion so that, when there is a request for reproduction of the contents recorded on the information recording medium or when there is a request for viewing of the contents received by the content receiving, recording and reproducing device, the reproduction or viewing of the contents is limited if determined by referring to the identification information, the main part viewing history information and the viewing history information that the commercial portion yet to be viewed exceeds a predetermined amount while the main part has been viewed.

2. A content distribution system comprising:
a content distribution device for distributing contents associated with a commercial; and
a content receiving, recording and reproducing device capable of receiving the distributed contents and recording the received contents on an information recording medium, and **characterized in that**:
when distributing the contents associated with a commercial from the content distribution device, the contents are transmitted after adding commercial information indicating the contents of the commercial, and a part or all of the contents distributed from the content distribution device are transmitted after adding viewing condition commercial information as a necessary condition for viewing of the contents;
when the content receiving, recording and reproducing device receiving the contents associated with a commercial records the contents on the information recording medium, each individual commercial portion associated with the contents is given identification information to be stored correspondingly to a recording place of the commercial portion and the commercial information;
in the case where, on reproducing the contents recorded on the information recording medium, it is determined that there is a commercial portion associated with the contents to be reproduced, the identification information corresponding to the commercial portion is stored correspondingly to main part viewing history information indicating that a main part has been viewed; and
in the case where it is determined that the commercial portion recorded on the information recording medium has been reproduced, viewing history information indicating that the commercial portion has been viewed is stored correspondingly to the identification information given to the commercial portion so that, when there is a request for reproduction or viewing of the contents with the condition on the content receiving, recording and reproducing device receiving the contents with the condition, the reproduction or viewing of the contents is limited if determined to be affirmative by referring to the commercial information and the viewing history information associated with each individual commercial portion recorded on the information recording medium as to whether or not there is the commercial portion yet to be viewed applicable to the viewing condition commercial information in the commercial portion recorded on the information recording medium.

3. A content receiving, recording and reproducing device for receiving contents associated with a commercial and commercial information indicating the contents of the commercial, comprising:
a content receiving portion;
a recording portion for recording the received contents on an information recording medium;
a CM information obtaining portion for obtaining the commercial information;
a control portion;
an operating portion; and
a storage portion, and thereby **characterized in that**:
when recording the contents on the information recording medium, the commercial information is obtained by the CM information obtaining portion, and each individual commercial portion associated with the contents is given identification information to be stored in the storage portion correspondingly to a recording place of the commercial portion and the commercial information;
in the case where, on reproducing the contents recorded on the information recording medium, it is determined that there is a commercial portion associated with the contents to be reproduced, the identification information corresponding to the commercial portion is stored in the storage portion correspondingly to main part viewing history information indicating that a main part has been viewed; and
in the case where it is determined that the commercial portion recorded on the information recording medium has been reproduced, viewing history information indicating that the commercial portion has been viewed is stored in the storage portion correspondingly to the identification information given to the commercial portion so that, when there is a request for reproduction of the contents recorded on the information recording medium or when there is a request for viewing of the contents received by the content receiving portion, the reproduction or viewing of the contents is limited if determined by referring to the identification information, the main part viewing history information and the viewing history information that the commercial portion yet to be viewed exceeds a predetermined amount while the main part has been viewed.

4. A content receiving, recording and reproducing device for receiving contents associated with a commercial and commercial information indicating the contents of the commercial, comprising:
a content receiving portion;
a recording portion for recording the received contents on an information recording medium;
a CM information obtaining portion for obtaining the commercial information;
a control portion;
an operating portion; and
a storage portion, and thereby **characterized in that**:
when recording the contents on the information recording medium, the commercial information is obtained by the CM information obtaining portion, and each individual commercial portion associated with the contents is given identification information to be stored in the storage portion correspondingly to a recording place of the commercial portion and the commercial information;
in the case where, on reproducing the contents recorded on the information recording medium, it is determined that there is a commercial portion associated with the contents to be reproduced, the identification information corresponding to the commercial portion is stored in the storage portion correspondingly to main part viewing history information indicating that a main part has been viewed; and
in the case where it is determined that the commercial portion recorded on the information recording medium has been reproduced, viewing history information indicating that the commercial portion has been viewed is stored in the storage portion correspondingly to the identification information given to the commercial portion so that, when there is a request for reproduction or viewing of the contents having the viewing condition commercial information as the condition necessary for viewing added thereto, the reproduction or viewing of the contents is limited if determined to be affirmative by referring to the commercial information, the main part viewing history information and the viewing history information associated with each individual commercial portion recorded on the information recording medium as to whether or not there is any commercial yet to be viewed applicable to the viewing condition commercial information while the main part has been viewed in the commercial portion recorded on the information recording medium.

5. The content receiving, recording and reproducing device according to claim 3 or 4 **characterized in that**, when there is a request for reproduction or viewing of the contents, the contents are reproduced or viewed after reproducing at least a part of the commercial portion yet to be viewed or at least a part of the commercial portion yet to be viewed is reproduced after reproducing or viewing the contents if determined that there is more than a predetermined amount of the commercials yet to be viewed while the main part has been viewed in the commercial portion recorded on the information recording medium.

6. The content receiving, recording and reproducing device according to any one of claims 3 to 5, **characterized in that**:
when receiving and viewing a grouping of the contents associated with a commercial, total time of the commercials associated with the grouping of the contents is calculated from the commercial information obtained by the CM information obtaining portion;
the grouping of the contents is recorded on the information recording medium but is not reproduced until a delayed time comes as the total time elapses from a start of distribution of the grouping of the contents; and
if determined by referring to the identification information, the main part viewing history information and the viewing history information that there is a commercial portion yet to be viewed recorded on the information recording medium while the main part has been viewed, it is reproduced between the start of distribution of the grouping of the contents and coming of the delayed time so as to start time shifting reproduction of the main part except the commercial portion of the grouping of the contents when the delayed time comes.

7. The content receiving, recording and reproducing device according to claim 6 **characterized in that** preference information on a user is pre-registered with the storage portion to determine the commercial portion recorded on the information recording medium yet to be viewed and matching with the preference information while the main part has been viewed by using the commercial information so as to preferentially reproduce the commercial portion thus obtained.

8. The content receiving, recording and reproducing device according to any one of claims 3 to 7, **characterized in that**:
when there is a request for deletion of the contents recorded on the information recording medium and if determined that there is the commercial portion associated with the contents to be deleted, it is determined by referring to the identification information, the main part viewing history information and the viewing history information whether or not there is a commercial portion yet to be viewed while the main part has been viewed;
in the case where there is such a commercial portion, the commercial portion is left on the information recording medium; and
in the case where it is determined thereafter that the commercial portion has been reproduced, it is deleted.

9. The content receiving, recording and reproducing device according to any one of claims 3 to 8, **characterized in that**:
the operating portion is provided with an unviewed CM reproducing button so that, when instructed to reproduce an unviewed commercial by an input of the unviewed CM reproducing button, an unviewed commercial portion recorded on the information recording medium is reproduced until there is an instruction to finish reproduction of the unviewed commercial or in a predetermined period of time; or
when instructed to reproduce the unviewed commercial by the input of the unviewed CM reproducing button while viewing the distributed contents, the unviewed commercial portion recorded on the information recording medium is reproduced while recording the contents being viewed on the information recording medium until there is the instruction to finish the reproduction of the unviewed commercial or in the predetermined period of time so as to start the time shifting reproduction of the contents being viewed on finishing the reproduction of the unviewed commercial; or
when instructed to reproduce the unviewed commercial by the input of the unviewed CM reproducing button while reproducing the contents recorded on the information recording medium, the unviewed commercial portion recorded on the information recording medium is reproduced until there is the instruction to finish the reproduction of the unviewed commercial or in the predetermined period of time so as to continue the reproduction of the contents recorded on the information recording medium on finishing the reproduction of the unviewed commercial.
